**Europäisches Patentamt**

**European Patent Office**

**Office européen des brevets**

(19)

(11) Veröffentlichungsnummer : **0 096 876**
**B1**

(12) **EUROPÄISCHE PATENTSCHRIFT**

(45) Veröffentlichungstag der Patentschrift :
15.04.87

(21) Anmeldenummer : 83105731.0

(22) Anmeldetag : 11.06.83

(51) Int. Cl.⁴ : **F 02 K 1/76**

(54) **Steuereinrichtung für Schubumkehrvorrichtungen.**

(30) Priorität : 16.06.82 DE 3222672

(43) Veröffentlichungstag der Anmeldung :
28.12.83 Patentblatt 83/52

(45) Bekanntmachung des Hinweises auf die Patenterteilung : 15.04.87 Patentblatt 87/16

(84) Benannte Vertragsstaaten :
**FR GB IT SE**

(56) Entgegenhaltungen :
**EP-A- 0 046 096**
**FR-A- 2 222 539**
**FR-A- 2 250 025**
**GB-A- 2 082 800**
**US-A- 3 015 936**
**US-A- 3 192 711**

(73) Patentinhaber : **MTU MOTOREN- UND TURBINEN-UNION MÜNCHEN GMBH**
**Dachauer Strasse 665 Postfach 50 06 40**
**D-8000 München 50 (DE)**

(72) Erfinder : **Dinger, Hans, Dr.-Ing.**
**Kapfstrasse 13**
**D-7990 Friedrichshafen (DE)**
Erfinder : **Holzhauer, Hilbert**
**Wiesenweg 12**
**D-8061 Stetten (DE)**
Erfinder : **Lang, Eberhard, Ing. grad.**
**Wasserturmstrasse 27**
**D-8045 Ismaning (DE)**

## Beschreibung

Die Erfindung bezieht sich auf eine Einrichtung gemäß dem Oberbegriff des Anspruchs 1.

Bei der durch die DE-A-24 13 702 bekannten Einrichtung dieser Art, aber als Einzeleinrichtung, d. h. für einen Schubumkehrer eines Düsentriebwerks, geht es um die Erleichterung der Entriegelung einer Verriegelungseinrichtung für den Schubumkehrer für das Ausfahren desselben.

Gemäß der vorliegenden Erfindung jedoch wird von einer Einrichtung mit jeweils eine Stellmotor, jeweils einem Ventil usw. ausgegangen — für jedes der beiden Düsentriebwerke ist also jeweils eine Einzeleinrichtung vorgesehen — und die Problematik ist die, daß die beiden Schubumkehrer im allgemeinen unterschiedlich schnell ausfahren, insbesondere durch unterschiedliche Luftlecke an den beiden Eingangskolben, unterschiedliche Reibungen in den beiden Differentialgetrieben und in Lagern und biegsamen Klappenantriebswellen der beiden Einzeleinrichtungen und unterschiedliche Werte des Luft-Lieferdrucks für die beiden Einzeleinrichtungen. Jene unterschiedlichen Luftlecke üben diesbezüglich einen sehr großen Einfluß aus, wegen der kleinen Arbeitsvolumen in den Zylindern für die Eingangskolben. Bei jenen Lagern handelt es sich insbesondere um Lager der Differentialgetriebe, der Kolbenstangen der Eingangskolben und von Hebeln an den Differentialgetrieben.

Aufgabe der Erfindung ist es, den Unterschied der Ausfahrgeschwindigkeiten der beiden Schubumkehrer möglichst gering zu machen oder praktisch zum Verschwinden zu bringen.

Diese Aufgabe wird erfindungsgemäß durch den kennzeichnenden Teil des Anspruchs 1 gelöst.

Bei dieser Ausfahrsynchronisationseinrichtung zieht ein langsamerer Schubumkehrer an der Zwischenstelle gleich, wonach dann sofort die Ausfahrunterbrechung für beide Schubumkehrer gleichzeitig aufgehoben wird und das Ausfahren bis zu den Ausfahrendstellungen weitergeht. Es wird erreicht, daß das Ausfahren der beiden Schubumkehrer gut synchronisiert wird und die beiden Schubumkehrer gleichzeitig die Schubumkehrphase etwa an den Zwischenstellen beginnen können und ihre Ausfahrendstellungen mit äußerst kleinem gegenseitigen Zeitunterschied erreichen, zumal die Zwischenstellen im allgemeinen näher den Enden als den Anfängen der Stellwege liegen. Das Synchronisieren kann zuverlässig erfolgen. Die Ausfahrsynchronisationseinrichtung kann durch zuverlässige und relativ einfache Teile gebildet werden.

Vorteilhafte Ausbildungen der Erfindung sind in den Unteransprüchen aufgeführt.

Die Ausbildung bzw. Bauart gemäß Anspruch 2 ist relativ einfach, und sie wirkt zuverlässig. Bei den Ausfahrunterbrechungsanschlägen handelt es sich insbesondere um pneumatisch steuerbare Anschläge, und die Mittel zum Unwirksammachen derselben sind insbesondere Luftventile. Es kann sich aber auch um elektrische Anschläge und Mittel handeln, z. B. bei Elektromotoren als Sollwertgeber. Die Ausführung gemäß Anspruch 3 zeigt einen einfachen Aufbau der pneumatisch steuerbaren Anschläge und eine einfache Steuerbarkeit derselben. Die elektromagnetische Steuerbarkeit der Luftventile gemäß Anspruch 4 trägt zur Einfachheit und Zuverlässigkeit der Synchronisationseinrichtung bei bzw. stellt die Voraussetzung für ein einfaches und sicheres Steuern der Anschläge bzw. der Luftventile auf elektrischem Weg dar. Die im Anspruch 5 wiedergegebenen elektrischen Stellungsgeber und das dort genannte elektrische UND-Gatter sind einfache und zuverlässige Mittel zur gleichzeitigen Aufhebung der Ausfahrunterbrechung für beide Schubumkehrer. Der Anspruch 6 gibt an, wo die Stelle der Ausfahrunterbrechung insbesondere liegt. Die in den Unteransprüchen aufgeführten mechanischen und elektrischen Teile der Synchronisationseinrichtung sind einfach und zuverlässig und ferner leicht einbaubar.

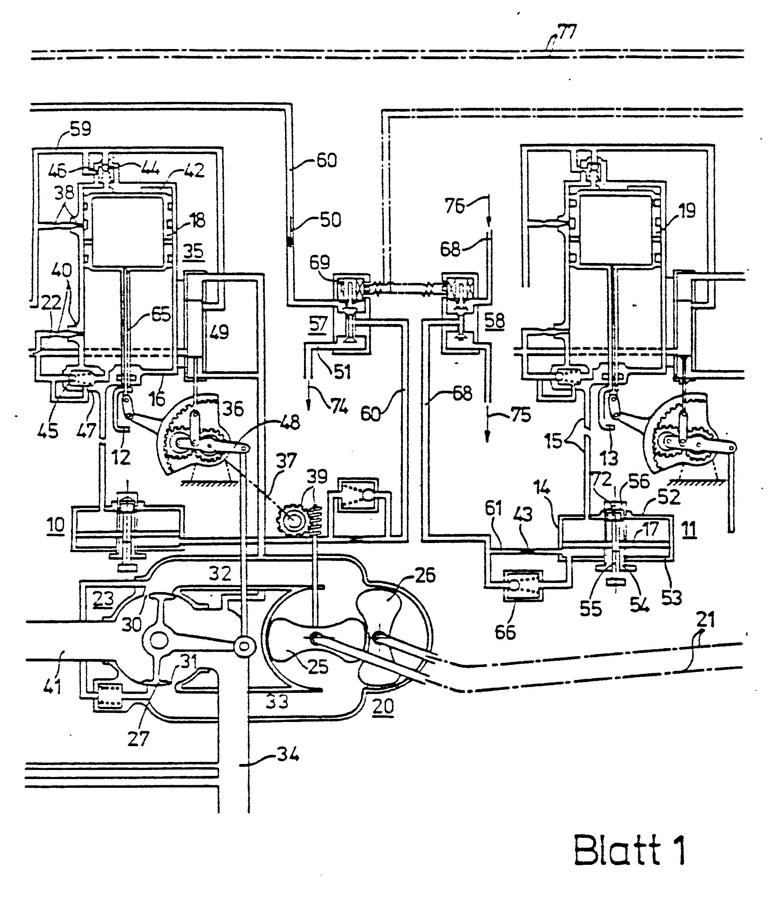

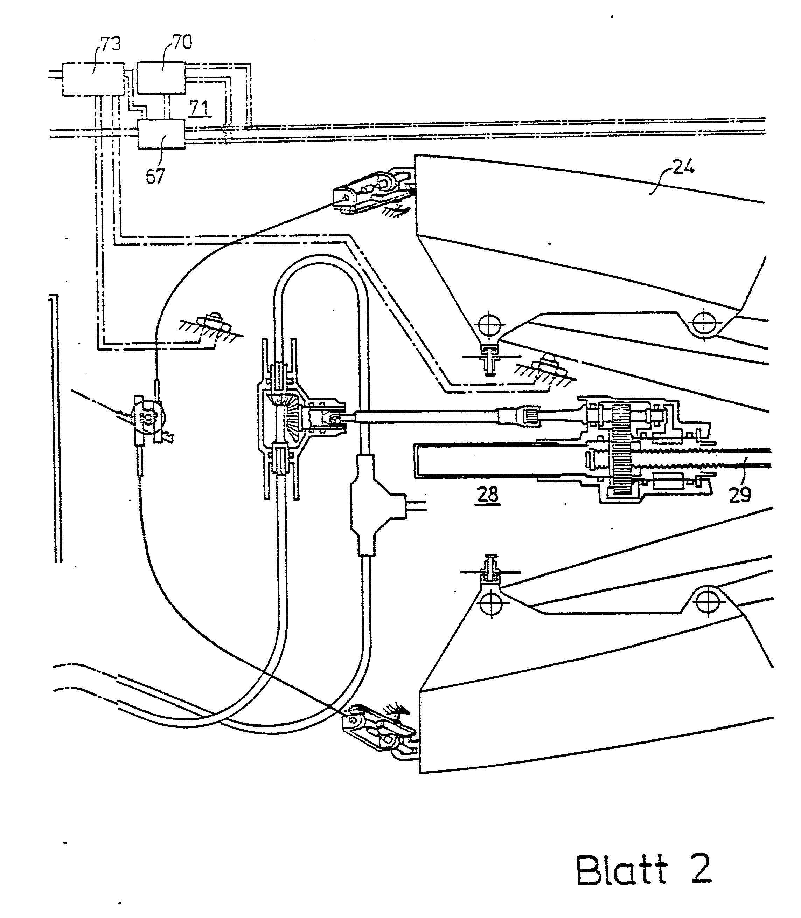

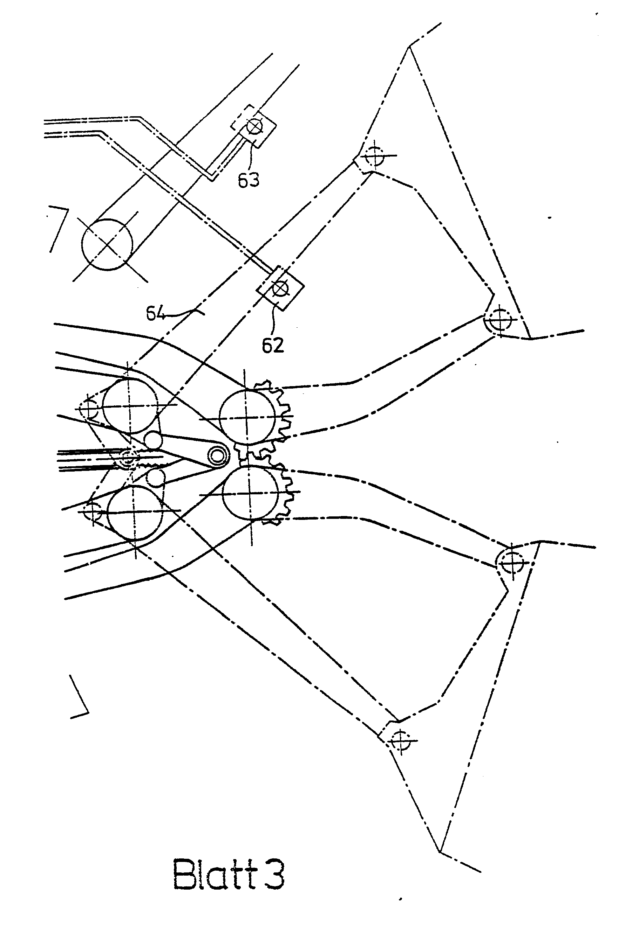

In der Zeichnung ist ein Ausführungsbeispiel der erfindungsgemäßen Verstelleinrichtungen schematisch dargestellt. Es handelt sich um eine aus Abbildungen auf drei Blättern (Blatt 1 bis 3) gebildete, zusammenhängende Figur. Zur Vereinfachung ist die Verstelleinrichtung links abgebrochen dargestellt. Das dort Weggelassene besteht im wesentlichen — siehe auch später — je Einzeleinrichtung aus einem Absperrventil, einem Richtungswählventil und einem Folgeventil und zugehörigen Luft- bzw. Druckluftleitungen.

Diese Einrichtung zum Verstellen der beiden Schubumkehrer bzw. von jeweils zwei Klappen (Schubumkehrklappen) 24 derselben weist zwei gleiche, durch Druckluft betriebene Drehkolben- bzw. Luftmotoren 20 auf. Diese weisen jeweils zwei Drehkörper 25 und 26 auf, deren Drehrichtungen gemeinsam umkehrbar sind. Es ist der Einfachheit halber nur einer der beiden Luftmotoren 20 dargestellt. Jeder Luftmotor 20 betätigt seinen Schubumkehrer, und zwar sind durch die Drehkörper 25, 26 über eine biegsame Welle 21 und eine Übertragungseinrichtung 28 die Klappen 24 je nach Drehrichtung der Drehkörper 25, 26 aus- und einfahrbar. Die Klappen 24 sind einmal voll eingefahren und ferner strichpunktiert zu 75 % des gesamten Stellwegs ausgefahren dargestellt. Die axialen Wege zweier gleicher, miteinander parallelarbeitender Kugelrollspindeln 29 (nur eine ist dargestellt) der Übertragungseinrichtung 28 sind jeweils von dem Stell- bzw. Drehweg bzw. der Anzahl der Umdrehungen der Drehkörper 25, 26 linear abhängig; jeder Stelle dieses Wegs bzw. jeder Umdrehungsanzahl ist eine bestimmte Stellung bzw. Winkellage der Klappen 24 zugeordnet. Die Verstelleinrichtung weist ferner je Luftmotor 20 ein Drehschieberventil 23 zur Steuerung der Druckluft für ihn auf. Beide Drehschieberventile 23 sind gleich. Der Luftmotor 20 und das Drehschieberventil 23 bilden zusammen mit zwei sie verbindenden Kanälen 32 und 33 eine bauliche Einheit. Die Druckluft ist dem Drehschieberventil 23 von einem Kompressor des zugehörigen Düsentriebwerks über eine Zuströmleitung 41, die das genannte, nicht dargestellte Absperrventil aufweist, zuführbar. Durch einen Drehschieber 27 sind zwei gleich große, sich diametral gegenüberliegende Ventildurchflußquerschnitte 30 und 31 steuerbar, und je nach Öffnungsdrehrichtung des Drehschiebers 27 sind durch die Druckluft die Drehkörper 25, 26 in ihrer einen oder ihrer entgegengesetzten Drehrichtung antreibbar. Die Austrittsluft strömt durch eine Abströmleitung 34 hindurch ab.

Die Verstelleinrichtung weist desweiteren zwei gleiche Eingangskolben (Sollwertkolben oder Zeitvorgabekolben) 18 und 19 zur Betätigung der Drehschieberventile 23 auf. Der Drehschieber 27 wird durch den zugehörigen, in einem Zylinder 35 durch Druckluftbeaufschlagung verschiebbaren bzw. steuerbaren Eingangskolben 18 bzw. 19 bzw. durch dessen Kolbenstange 65, die eine Stirnwand 16 des Zylinders 35 durchstößt, über ein Differentialgetriebe 36 betätigt, das vom zugehörigen Luftmotor 20 über eine ein untersetzendes Rückführgetriebe (Schneckengetriebe) 39 aufweisende Rückkopplung 37 beeinflußbar ist. Wird der Eingangskolben 18 bzw. 19 in seiner dargestellten, oberen Stellung oben druckluftbeaufschlagt, so wird er nach unten, zur Stirnwand 16, bewegt, und die Klappen 24 werden ausgefahren. Der Luftmotor 20, das Drehschieberventil 23 und das Differentialgetriebe 36 zusammen wirken als Folgeeinrichtung, die der Bewegung des Eingangskolbens 18 bzw. 19 nachläuft. Es handelt sich um einen Stellungsregler. Die Stellung eines Hebels 48 am Differentialgetriebe 36 ist ein Maß für die Regelabweichung. Durch ein Schieberventil 49 wird ein Anwachsen der Regelabweichung über ein unzulässiges Maß hinaus verhindert. Zur Steuerung der Eingangskolben 18 und 19 durch Druckluft dienen jeweils das genannte nicht dargestellte Folgeventil (Schieberventil), zwei an den Enden des Zylinders 35 vorgesehene Rückschlagventile 44 und 45 zum Einlassen der Druckluft in den jeweiligen Hochdruckraum 42 des Zylinders 35 und zwei an und vier vor diesen Enden vorgesehene Drosselöffnungen 46, 47 und 38, 40 des Zylinders 35. Vom Folgeventil führt eine Luftleitung 59 zu den Drosselöffnungen 38 und 46 und zum Rückschlagventil 44 und eine Luftleitung 22 zu den Drosselöffnungen 40 und 47 und zum Rückschlagventil 45. Die gewünschte Eingangskolben-Bewegungsrichtung zum Aus- oder Einfahren des Schubumkehrers wird je Eingangskolben 18 bzw. 19 durch entsprechende Einstellung des zugehörigen genannten, nicht dargestellten Richtungswählventils mittels Druckluft über das Folgeventil erzielt.

Die Verstelleinrichtung weist eine Ausfahrsynchronisationseinrichtung für die beiden Schubumkehrer bzw. deren Klappen 24 auf. Die Ausfahrsynchronisationseinrichtung weist zwei gleiche, pneumatisch steuerbare Ausfahrunterbrechungsanschläge 10 und 11 für mit den Eingangskolben 18 und 19 mitbewegbare, gleiche Gegenanschlagstücke 12 und 13 auf. Das Gegenschlagstück 12 bzw. 13 ist an der Kolbenstange 65 fest vorgesehen. Am Zylinder 35 ist in der Zeichnung unten ein Gehäuse 15 fest vorgesehen, in dem sich u. a. das Gegenanschlagstück 12 bzw. 13 und das Differentialgetriebe 36 befinden. Der Anschlag 10 bzw. 11 weist einen mit dem Eingangskolben 18 bzw. 19 koaxialen Zylinder aus einer Zylinderwand 14 und zwei Stirnwänden 52 und 53 auf, und an das Gehäuse 15 schließen sich unten, mit ihm einteilig, die Stirnwand 52 und die Zylinderwand 14 an. Insbesondere ist aber, was nicht dargestellt ist, ein solcher Zylinder (14, 52, 53) nachträglich unten an das Gehäuse 15 fest angebaut, vorzugsweise mittels miteinander verschraubter Gewindestutzen. Im Zylinder 14, 52, 53 befindet sich ein Kolben 17. Dieser ist auf dem dem Eingangskolben 18 bzw. 19 zugewandten Teil eines zentralen Bolzens 55 von einer koaxialen, durch die Stirnwand 53 geschraubten, in den Innenraum des Zylinders 14, 52, 53 ragenden Stellmutter 54, durch die der Bolzen 55 mit seinem anderen Teil geschraubt ist, durch Beaufschlagung mit Druckluft bis an einen Anschlag 72 des Bolzens 55 verschiebbar und dort haltbar. Über den erstgenannten Teil des Bolzens 55 ist eine koaxiale, durch die Stirnwand 52 führende, zum Gegenanschlagstück 13 hin geschlossene Anschlaghülse 56 gestülpt, die mit dem Kolben 17 eine feste Einheit bildet.

Jede der beiden Stellmuttern 54 ist axial so eingestellt, daß bei Anlage des Kolbens 17 an der Stellmutter 54 der Abstand zwischen ihm und dem Anschlag 72 25 % des Gesamtstellwegs des Eingangskolbens 18 bzw. 19 beträgt. Bei dieser Anlage des Kolbens 17 und bei der dargestellten Ausfahranfangsstellung des Eingangskolbens 18 bzw. 19 ist der Abstand zwischen dem Gegenanschlagstück 12 bzw. 13 und der Anschlaghülse 56 gleich diesem Gesamtstellweg. Dieser Abstand wird durch die Verschiebung des Kolbens 17 von der Stellmutter 54 bis an den Anschlag 72, also die Verschiebung der Anschlaghülse 56 in ihre Anschlagstellung, auf 75 % verringert.

Es mündet in den Zylinder 14, 52, 53 eine Luftleitung 60 bzw. 68, die, was nicht dargestellt ist, vor dem jeweiligen genannten, nicht dargestellten Absperrventil von der Zuströmleitung 41 abgeht und ein elektromagnetisch steuerbares Ventil 57 bzw. 58 zur Beaufschlagung des Kolbens 17 mit Druckluft und zum Ablassen der Druckluft aufweist. Die Ventile 57 und 58 weisen jeweils einen Elektromagneten 69 und eine Druckluftablaßleitung 51 auf. In der Luftleitung 60 bzw. 68 ist jeweils zwischen dem Ventil 57 bzw. 58 und dem Zylinder 14, 52, 53 ein Rückschlagventil 66 vorgesehen, und ferner ist eine das Rückschlagventil 66 umgehende Luftleitung 61 vorgesehen, die zum Ablassen der Druckluft vom Zylinder 14, 52, 53 abgeht, eine Drosselstelle 43 enthält und zwischen dem Rückschlagventil 66 und dem Ventil 57 bzw. 58 in die Luftleitung 60 bzw. 68 mündet.

Erhalten die beiden Elektromagnete 69 über eine elektrische Einrichtung 71 elektrischen Strom, so werden durch die Elektromagnete 69 gegen Federkräfte und miteinander gleichzeitig die beiden Ventile 57 und 58 zur genannten Beaufschlagung geöffnet und bezüglich des genannten Ablassens geschlossen, so daß die Druckluft durch die Luftleitungen 60 und 68 — siehe die Strömungsrichtungspfeile 50 und 76 — und die geöffneten Rückschlagventile 66 in die Zylinder 14, 52, 53 strömt und die Kolben 17 beaufschlagt und somit diese und die Anschlaghülsen 56 in Anschlagstellung bringt und hält.

Trifft nun z. B. das Gegenanschlagstück 12 auf die korrespondierende Anschlaghülse 56, wodurch das Ausfahren des zugehörigen Schubumkehrers unterbrochen wird, und hinkt das Gegenanschlagstück 13 hinterher, so wartet das angehaltene Gegenanschlagstück 12 und somit der eben genannte Schubumkehrer, bis das Gegenanschlagstück 13 auf seine korrespondierende Anschlaghülse 56 trifft und also das Ausfahren des anderen Schubumkehrers unterbrochen wird und somit die Stellungen der beiden Schubumkehrer zueinander gleich sind.

Die Ausfahrsynchronisationseinrichtung weist je Schubumkehrer einen elektrischen Stellungsgeber 62 bzw. 63 auf, der am zugehörigen Düsentriebwerk fest angebracht ist und durch einen Hebel 64 einer Verstellhebeleinrichtung des Schubumkehrers während des Ausfahrens der Klappen 24 betätigbar ist. Der Stellungsgeber 62 bzw. 63 ist so angebracht, daß die Betätigung derselben durch den zugehörigen Hebel 64 erfolgt, kurz bevor der zugehörige Schubumkehrer die Stellung erreicht hat, die durch das Auftreffen des zugehörigen Gegenanschlagstücks 12 bzw. 13 auf die in Anschlagstellung befindliche, korrespondierende Anschlaghülse 56 bestimmt ist.

Wenn nach der Betätigung der beiden Stellungsgeber 62 und 63 durch die beiden im allgemeinen nicht gleichzeitig bei ihnen ankommenden Hebel 64 die beiden Stellungssignale der beiden Stellungsgeber 62 und 63 an einem elektrischen UND-Gatter 67 der elektrischen Einrichtung 71, in das sie eingegeben werden, vorhanden sind, was besagt, daß beide Schubumkehrer die durch das genannte Auftreffen bestimmten Stellungen erreicht haben, wird dadurch gleichzeitig der genannte elektrische Strom für die beiden Elektromagnete 69 im selben Zeitpunkt abgeschaltet. Dadurch werden durch genannte Federkräfte und miteinander gleichzeitig beide Ventile 57 und 58 zur Aufhebung der Beaufschlagung geschlossen und zum Ablassen geöffnet, so daß die Druckluft aus den Zylindern 14, 52, 53 bei geschlossenen Rückschlagventilen 66 durch die Luftleitungen 61, die Luftleitungen 60 und 68, die Ventile 57 und 58 und die Druckluftablaßleitungen 51 hindurch entweicht — siehe die Ausströmpfeile 74 und 75. Somit wird also die Ausfahrunterbrechung für beide Schubumkehrer gleichzeitig aufgehoben. Es können die jeweils aus der Anschlaghülse 56 und dem Kolben 17 bestehenden Einheiten praktisch ohne Widerstand an die Stellmuttern 54 gelangen. Durch das genannte Stromabschalten bei Anlage der Gegenanschlagstücke 12 und 13 an den Anschlaghülsen 56 im selben Zeitpunkt für beide Elektromagnete 69 werden beide Anschlaghülsen 56 miteinander gleichzeitig unwirksam gemacht, und beide Schubumkehrer beginnen die Schubumkehrphase, also die letzten 25 Prozent des Gesamtstell- bzw. -ausfahrwegs, gleichzeitig, wodurch sie ihre Ausfahrendstellungen praktisch gleichzeitig erreichen.

Durch ein elektrisches Zeitverzögerungsglied 70 der Einrichtung 71 kann eine gewünschte oder notwendig erscheinende Zeitspanne zwischen der Ankunft des zurückgebliebenen Schubumkehrers an der Ausfahrunterbrechungsstelle und dem gemeinsamen Wiederstart der beiden Schubumkehrer eingestellt werden, so daß die beiden am UND-Gatter 67 anstehenden Signale erst nach dieser Zeitspanne durchgeschaltet werden. Diese Zeitspanne ist im allgemeinen sehr klein.

Bei einem Fehler oder Versagen des einen Düsentriebwerks oder Schubumkehrer-Systems kann durch Betätigung einer Übersteuereinrichtung 73 durch den Piloten das UND-Gatter 67 so beeinflußt werden, daß der Stromkreis zu den Elektromagneten 69 unterbrochen und somit die Synchronisationsverbindung zwischen den beiden Schubumkehr-Systemen bzw. Einzeleinrichtungen aufgehoben wird. Die Übersteuereinrichtung 73 liegt im elektrischen Stromkreis 77 zwischen dem UND-Gatter 67 und dem Richtungswählventil.

**Patentansprüche**

1. Einrichtung zum Verstellen, d. h. Ein- und Ausfahren zweier Schubumkehrer (24) für zwei Düsentriebwerke eines Flugzeugs, mit jeweils einem durch Druckluft betriebenen Stellmotor (20), jeweils einem Ventil (23) zur Steuerung der Druckluft für den Stellmotor (20) und jeweils einem Sollwertgeber (18, 19), insbesondere durch Druckluftbeaufschlagung steuerbaren Sollwertkolben (Eingangskolben) (18, 19), durch den das Ventil (23) über ein Differentialgetriebe (36), das vom Stellmotor (20) über eine Rückkopplung (37) beeinflußbar ist, betätigt wird, dadurch gekennzeichnet, daß die Verstelleinrichtung eine Einrichtung (10, 12 ; 11, 13) zur Unterbrechung der Ausfahrbewegung der Schubumkehrer (24) an gleichen Zwischenstellen (Stellungsgeber 62, 63) der beiden Stellwege aufweist, welche dann aktiviert wird, wenn einer der beiden Schubumkehrer (24) die Zwischenstelle früher erreicht als der andere und daß Mittel (67, 69, 57, 58) vorgesehen sind, die die Ausfahrunterbrechung aufheben, sobald beide Schubumkehrer (24) die Zwischenstelle erreicht haben.

2. Einrichtung nach Anspruch 1, dadurch gekennzeichnet, daß diese Ausfahrsynchronisationseinrichtung Ausfahrunterbrechungsanschläge für die Sollwertgeber oder Eingangskolben (18, 19) oder für mit diesen (18, 19) mitbewegbare Gegenanschläge (Gegenanschlagstücke (12, 13)) und Mittel zum Unwirksammachen dieser Ausfahrunterbrechungsanschläge aufweist.

3. Einrichtung nach Anspruch 2, dadurch gekennzeichnet, daß die Ausfahrunterbrechungsanschläge pneumatisch steuerbare Anschläge (10, 11) mit jeweils einem ein Anschlagstück (Anschlaghülse (56)) tragenden Kolben (17) sind und die Anschlagstücke (Anschlaghülsen 56)) durch Beaufschlagung der Kolben (17) mit Druckluft in Anschlagstellung bringbar und haltbar sind und durch Ablassen dieser Druckluft unwirksam werden.

4. Einrichtung nach Anspruch 3, dadurch gekennzeichnet, daß die Ausfahrsynchronisationseinrichtung je pneumatisch steuerbaren Anschlag (10, 11) ein elektromagnetisch steuerbares Ventil (57, 58) zur Beaufschlagung des Kolbens (17) mit der Druckluft und zum Ablassen der Druckluft aufweist.

5. Einrichtung nach Anspruch 1, 2, 3 oder 4, gekennzeichnet, durch eine genannte Ausfahrsynchronisationseinrichtung mit je Schubumkehrer einem ihm gegenüber feststehenden, durch ihn während seines Ausfahrens betätigbaren, elektrischen Stellungsgeber (62, 63) für die Aufhebung der Ausfahrunterbrechung und einem beiden Stellungsgebern (62, 63) gemeinsamen, elektrischen UND-Gatter (67), das diese Aufhebung gleichzeitig für beide Schubumkehrer erst zuläßt, wenn an ihm das elektrische Stellungssignal des einen Stellungsgebers (62) und das elektrische Stellungssignal des anderen Stellungsgebers (63) vorhanden sind.

6. Einrichtung nach einem der Ansprüche 1 bis 5, gekennzeichnet durch eine genannte Ausfahrsynchronisationseinrichtung mit Ausfahrunterbrechung etwa zu Beginn der Schubumkehrphase.

## Claims

1. Arrangement for displacing, i. e. retracting and extending, two thrust reversers (24) for two jet propulsion units of an aircraft, with in each case a positioning motor (20) operated by compressed air, in each case a valve (23) for controlling the compressed air for the positioning motor (20) and in each case a desired value transmitter (18, 19) particularly a desired value piston (input piston) (18, 19) which can be controlled by compressed air and by which the valve (23) can be actuated via a differential gearing (36) which can be influenced by the positioning motor (20) through a feedback coupling (37), characterised in that the adjusting or displacement means comprise a device (10, 12 ; 11, 13) for interrupting the extension movment of the thrust reversers (24) at identical midway positions (position transmitter 62, 63) of the two adjustment paths which is activated when one of the two thrust reversers (24) reaches the intermediate position earlier than the other, and in that means (67, 69 ; 57, 58) are provided to cancel out the interruption of extension as soon as both thrust reversers (24) have reached the midway position.

2. Arrangement according to claim 1, characterised in that this extension synchronising device comprises extension interrupting stops for the desired value transmitters or input pistons (18, 19) or for counter stops (counter abutment members 12, 13) adapted for movement together with the aforesaid pistons (18, 19) and also comprising means for rendering the said extension interrupting stops inoperative.

3. Arrangement according to claim 2, characterised in that the extension interrupting stops are pneumatically controllable abutments (10, 11) each of which has a piston (17) carrying an abutment piece (sleeve 56), the abutment pieces (sleeves 56) being adapted to move into and maintained in the abutment position by applying compressed air to the pistons (17) and to be rendered inoperative by discontinuing the compressed air.

4. Arrangement according to claim 3, characterised in that the extension synchronising means comprise for each pneumatically controllable abutment (10, 11) an electro-magnetically controllable valve (57, 58) for applying compressed air to and for discontinuing the application of compressed air to the piston (17).

5. Arrangement according to claim 1, 2, 3 or 4, characterised by a so-called extension synchronising means which, for each thrust reverser and fixed in relation to the latter, an electrical position transmitter (62, 63) which can be actuated by the thrust reverser as it is extended, to cancel out the extension interruption and with, common to both position transmitters (62, 63) an electric AND gate (67) which only permits this cancelling override for both thrust reversers simultaneously when the electrical position signal of one position transmitter (62) and the electrical position signal of the other position transmitter (63) are present at it.

6. Arrangement according to one of claims 1 to 5, characterised by a so-called extension synchronising means with extension interruption substantially at the commencement of the thrust reversal phase.

## Revendications

1. Dispositif pour régler, c'est-à-dire pour rentrer et sortir deux inverseurs de poussée (24) pour deux moteurs à réaction d'un avion avec respectivement un moteur de réglage (20) entraîné par l'air comprimé, respectivement une vanne (23) pour commander l'air comprimé pour le moteur de réglage (20) et respectivement un indicateur de valeur de consigne (18, 19) notamment alimenté en air comprimé, et susceptibles d'être commandés (pistons d'entrée) (18, 19), grâce auxquels la vanne (23) est actionnée par l'intermédiaire d'un mécanisme différentiel (36) qui est susceptible d'être influencé par le moteur de réglage (20) par l'intermédiaire d'un accouplement en retour (37), dispositif caractérisé en ce qu'il comporte un dispositif (10, 12 ; 11, 13) pour interrompre le déplacement de sortie de l'inverseur de poussée (24) au même point intermédiaire (indicateurs de position 62, 63) des deux courses de réglage, ce déplacement étant ensuite activé lorsqu'un des deux inverseurs de poussée (24) a atteint ce point intermédiaire avant l'autre inverseur de poussée, tandis qu'il est prévu des moyens (67, 69, 57, 56) qui suppriment l'interruption du déplacement de sortie dès que les deux inverseurs de poussée (24) ont atteint ce point intermédiaire.

2. Dispositif selon la revendication 1, caractérisé en ce que le dispositif de synchronisation du mouvement de sortie comporte des butées d'interruption du mouvement de sortie pour les indicateurs de valeur de consigne ou les pistons d'entrée (18, 19) ou bien pour des butées antagonistes (pièces de butées antagonistes) (12, 13) entraînées par ces pistons d'entrée, et des moyens pour rendre non opérationnelles ces butées d'interruption du mouvement de sortie.

3. Dispositif selon la revendication 2, caractérisé en ce que les butées d'interruption du mouvement de sortie sont des butées (10, 11), susceptibles d'être commandées pneumatiquement, avec respectivement un piston (17) portant une pièce de butée (douille de butée (56)), et en ce que ces pièces de butées (douilles de butée (56)) sont susceptibles d'être amenées et maintenues dans la position de butée en sollicitant les pistons (17) avec de l'air comprimé et deviennent inopérantes en laissant échapper cet air comprimé.

4. Dispositif selon la revendication 3, caractérisé en ce que le dispositif de synchronisation du mouvement de sortie comporte, pour chaque butée (10, 11) susceptible d'être commandée pneumatiquement, une soupape (57, 58) susceptible d'être commandée électromagnétiquement pour solliciter le piston (17) avec l'air comprimé et pour laisser échapper cet air comprimé.

5. Dispositif selon la revendication 1, 2, 3 ou 4, caractérisé en ce qu'il est prévu un tel dispositif de synchronisation du mouvement de sortie, comportant pour chaque inverseur de poussée un indicateur électrique de position (62, 63), placé à poste fixe en face de cet inverseur et susceptible d'être actionné par lui pendant son mouvement de sortie, pour lever l'interruption du mouvement de sortie, et comportant une porte électrique ET (67), commune aux deux indicateurs de position (62, 63), et qui n'autorise simultanément cette levée pour les deux inverseurs de position que lorsque sont présents à cette porte à la fois le signal électrique de position de l'un (62) des indicateurs de position et le signal électrique de position de l'autre indicateur de position (63).

6. Dispositif selon une des revendications 1 à 5, caractérisé en ce qu'il est prévu un tel dispositif de synchronisation du mouvement de sortie avec interruption du mouvement de sortie à peu près au début de la phase d'inversion de poussée.

Blatt 1

Blatt 2

63

64

62

Blatt 3